# EUROPEAN PATENT APPLICATION

(11) **EP 3 562 104 A1**
(43) Date of publication of application: **30.10.2019**
(21) Application number: 19160946.0
(22) Date of filing: 06.03.2019
(51) Int. Cl.: H04L 12/46, G06F 3/12

(54) **IMAGE FORMING APPARATUS, SYSTEM, AND CHARGING METHOD**

(30) Priority: 19.03.2018 JP 2018051615
(71) Applicant: Ricoh Company, Ltd., Tokyo 143-8555 (JP)
(72) Inventor: TSUCHIYA, Yu, Ohta-ku, Tokyo 143-8555 (JP)
(74) Representative: Watkin, Timothy Lawrence Harvey

(57) **Abstract**

According to an embodiment, there is provided an image forming apparatus (10) connectable to a plurality of networks (40A, 40B, 40C) including a network device (20A, 20B, 20C) that is compatible with a tag VLAN. The image forming apparatus (10) includes a plurality of paper-ejection section tables, a storage unit (14), a determining unit (102), and an updating unit (103). The storage unit (14) is configured to store correspondence information relating tag information on the tag VLAN, paper-ejection section information indicating the paper-ejection section table, and charging information. The determining unit (102) is configured to determine the paper-ejection section table based on the correspondence information and the tag information included in paper-ejection request information transmitted from an information processing apparatus (10) in any network among the plurality of networks (40A, 40B, 40C). The updating unit (103) is configured to update charging information that is included in the correspondence information and corresponds to the paper-ejection section table determined by the determining unit (102).

## Description

### BACKGROUND OF THE INVENTION

### 1. Field of the Invention

The present invention relates to an image forming apparatus, a system, and a charging method.

### 2. Description of the Related Art

There are conventionally designed methods of sharing the same printer in a situation where multiple companies are present on the same floor. However, as each company manages a network, each network is not accessible; therefore, typically, an individual printer installed in the network of each company is used.

There are known methods of separating networks by using VLANs. With regard to the VLAN, there is a technology called a tag VLAN and a technology using a tag VLAN, for example, is disclosed as follows. A transmission-source MAC address and a tag VLAN are extracted from a received packet, and learning is executed by relating the tag VLAN and the MAC address so that the tag VLAN to be added to a packet is properly adjusted in accordance with a communication destination (see Japanese Unexamined Patent Application Publication No. 2006-311066).

However, there is a problem in that, even though networks are separated in a system using a tag VLAN, there is no system to charge each user in each network with regard to a shared image forming apparatus (e.g., printer).

In consideration of the foregoing, there is a need to provide an image forming apparatus, a system, and a charging method that make it possible to control charging for each user with regard to each different paper ejection section.

### SUMMARY OF THE INVENTION

According to an embodiment, there is provided an image forming apparatus connectable to a plurality of networks including a network device that is compatible with a tag VLAN. The image forming apparatus includes a plurality of paper-ejection section tables, a storage unit, a determining unit, and an updating unit. The storage unit is configured to store correspondence information relating tag information on the tag VLAN, paper-ejection section information indicating the paper-ejection section table, and charging information. The determining unit is configured to determine the paper-ejection section table based on the correspondence information and the tag information included in paper-ejection request information transmitted from an information processing apparatus in any network among the plurality of networks. The updating unit is configured to update charging information that is included in the correspondence information and corresponds to the paper-ejection section table determined by the determining unit.

### BRIEF DESCRIPTION OF THE DRAWINGS

FIG. 1 is a diagram that illustrates an example of the overall configuration of a network system according to the present embodiment;
FIG. 2 is a diagram that illustrates an example of the hardware configuration of an image forming apparatus;
FIG. 3 is a diagram that illustrates an example of the configuration of a setting table;
FIG. 4 is a diagram that illustrates an example of the configuration of the primary functional block regarding a paper-ejection section determination and charging process; and
FIG. 5 is a diagram that illustrates an example of the flow of the paper-ejection section determination and charging process by the image forming apparatus.

The accompanying drawings are intended to depict exemplary embodiments of the present invention and should not be interpreted to limit the scope thereof. Identical or similar reference numerals designate identical or similar components throughout the various drawings.

### DESCRIPTION OF THE EMBODIMENTS

The terminology used herein is for the purpose of describing particular embodiments only and is not intended to be limiting of the present invention.

As used herein, the singular forms "a", "an" and "the" are intended to include the plural forms as well, unless the context clearly indicates otherwise.

In describing preferred embodiments illustrated in the drawings, specific terminology may be employed for the sake of clarity. However, the disclosure of this patent specification is not intended to be limited to the specific terminology so selected, and it is to be understood that each specific element includes all technical equivalents that have the same function, operate in a similar manner, and achieve a similar result.

With reference to the attached drawings, a detailed explanation is given below of an embodiment of an image forming apparatus, a system, and a charging method according to the present invention. The present invention is not limited to the following embodiment.

### First embodiment

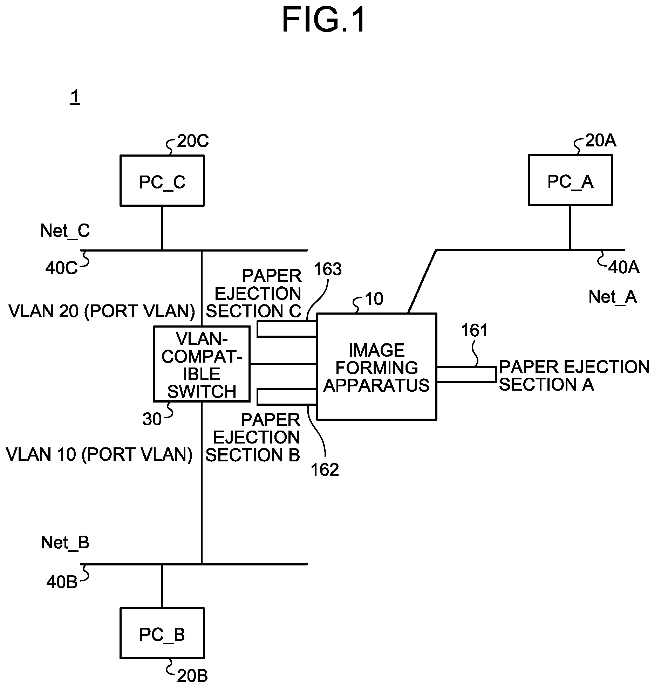

FIG. 1 is a diagram that illustrates an example of the overall configuration of a network system according to the present embodiment. A network system 1 illustrated in FIG. 1 includes an image forming apparatus 10, a PC (personal computer) 20A, a PC 20B, a PC 20C, a VLAN (virtual local area network)-compatible switch 30, a first network 40A, a second network 40B, and a third network 40C. Here, the PC 20A, the PC 20B, and the PC 20C are examples of an "information processing apparatus". The VLAN-compatible switch 30 is an example of a "network device".

FIG. 1 illustrates three network systems (the first network 40A, the second network 40B, and the third network 40C). Among them, the first network 40A is a network system that does not use a tag VLAN, and the second network 40B and the third network 40C are network systems that use a tag VLAN.

A network system using a tag VLAN and a network system not using it are separated from each other. The second network 40B and the third network 40C are connected to each other via the VLAN-compatible switch 30, and the image forming apparatus 10 is connected to the second network 40B and the third network 40C via the VLAN-compatible switch 30. Furthermore, the image forming apparatus 10 is also connected to the third network 40C that does not use a tag VLAN.

Specifically, the second network 40B and the third network 40C are connected to each other via different ports (a VLAN 10, a VLAN 20, respectively) of the VLAN-compatible switch 30.

Here, the three network systems (the first network 40A, the second network 40B, the third network 40C) are illustrated by an example; however, there may be other multiple systems (two systems, four or more systems, or the like).

The PC 20A is connected to the first network 40A, the PC 20B is connected to the second network 40B, and the PC 20C is connected to the third network 40C. Although the single PC (the PC 20A, the PC 20B, the PC 20C) is illustrated in each network (the first network 40A, the second network 40B, the third network 40C), it is illustrated by an example, and there is no limitation on the number of PCs.

The image forming apparatus includes multiple NICs (network interface controllers) that are each coupled to a network using a tag VLAN or a network not using a tag VLAN. Furthermore, the controller has the typical hardware configuration, including an arithmetic device, a storage device, and a network interface. A paper ejection section is prepared depending on each network system, and charging information (counter) is also controllable in accordance with each network and paper used.

The image forming apparatus 10 has, as paper ejection sections, a paper ejection section A 161, a paper ejection section B 162, and a paper ejection section C 163. When each PC (the PC 20A, the PC 20B, the PC 20C) transmits a printing request signal via the corresponding network (the first network 40A, the second network 40B, the third network 40C), printed paper is ejected by using any one of the paper ejection section A, the paper ejection section B, and the paper ejection section C. The configuration and the operation of the image forming apparatus 10 are explained below in detail.

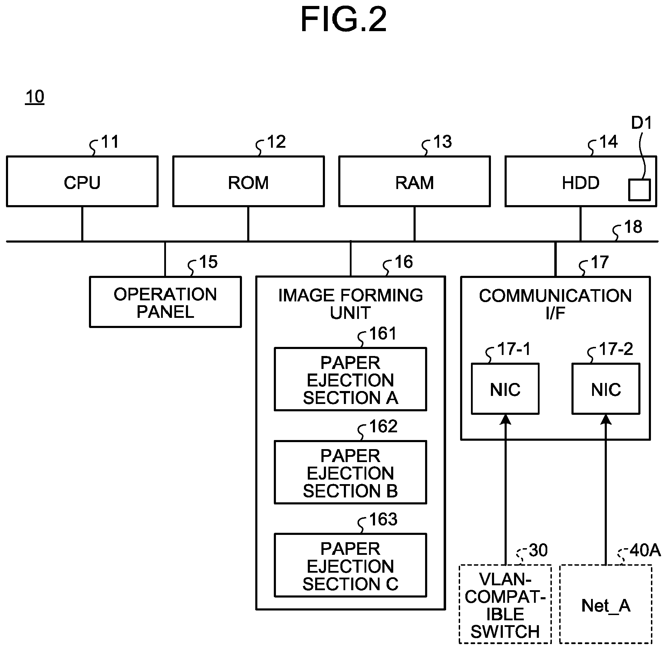

FIG. 2 is a diagram that illustrates an example of the hardware configuration of the image forming apparatus 10. In FIG. 2, the image forming apparatus 10 includes a CPU (central processing unit) 11, a ROM (read only memory) 12, a RAM (random access memory) 13, an HDD (hard disk drive) 14, an operation panel 15, an image forming unit 16, and a communication I/F 17. The units are connected to one another via a bus 18.

The CPU 11 is a central processing unit that performs calculation processes and control processes. The CPU 11 controls the overall image forming apparatus 10 in an integrated manner by executing various programs, or the like.

The ROM 12 is a nonvolatile memory that stores fixed programs (e.g., BIOS (basic input/output system)). The RAM 13 is a volatile memory used as a work area, or the like, for various types of processing. The HDD 14 is illustrated as an example of "storage unit", and it is an auxiliary storage device that stores operation programs, data, and the like. The operation programs include the OS (operating system) dedicated to the image forming apparatus, firmware, application programs, and the like. Furthermore, a setting table D1 described later is stored. The setting table D1 is an example of "correspondence information".

The operation panel 15 includes a display unit and an input receiving unit for a user to give commands for operation to the main body. The input receiving unit is a hardware key, a touch panel sensor, or the like. The display unit is an LCD (liquid crystal display), or the like.

The image forming unit 16 includes an engine such as a plotter to form images. Furthermore, the image forming unit 16 has multiple paper ejection sections (the paper ejection section A, the paper ejection section B, and the paper ejection section C) and ejects paper to the selected paper ejection section among them.

The communication I/F 17 is an Ethernet (registered trademark) board including a plurality of NICs 17-1, 17-2. It is a communication interface for connecting the main body of the image forming apparatus 10 to Net_A (the first network 40A) and the VLAN-compatible switch 30 (the second network 40B, the third network 40C). According to the present embodiment, the NIC 17-1 is connected to the VLAN-compatible switch 30, and the NIC 17-2 is connected to the Net_A.

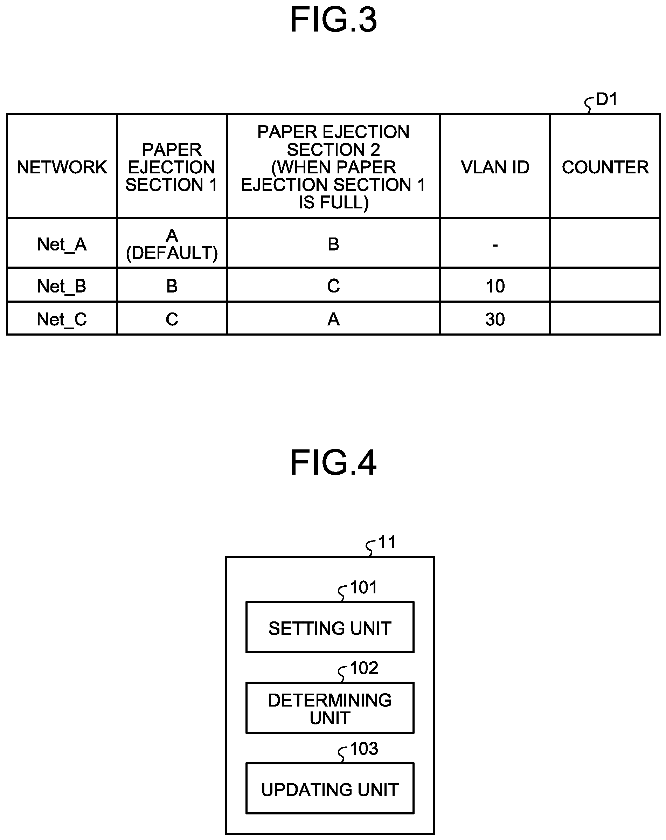

FIG. 3 is a diagram that illustrates an example of the configuration of the setting table D1. The setting table D1 illustrated in FIG. 3 includes, as setting items, "network" indicating the type of network, "paper ejection section 1" indicating a first paper ejection section, "paper ejection section 2" indicating a second paper ejection section, "VLAN ID" indicating the type of tag VLAN, and "counter" that updates charge. The setting items illustrated in FIG. 3 are examples of setting data (table values). Here, information set in "the paper ejection section 1" and "the paper ejection section 2" is equivalent to "paper-ejection section information". Information set in "VLAN ID" is equivalent to "tag information". Information set in "counter" is equivalent to charging information. The information (table value) set in each setting item in FIG. 3 is an example.

The table value in each setting item except for "counter" is set by an administrator via the operation panel 15, or the like. Instead of the operation panel 15, a table value may be set via, for example, an administrator PC (not illustrated) provided in the first network 40A. Details on each table value illustrated in FIG. 3 are given later in the operation flow described below.

Next, the functional block of the image forming apparatus 10 is illustrated, and an explanation is given of the flow of a process to determine a paper ejection section and charge (hereafter, referred to as "paper-ejection section determination and charging process") by the image forming apparatus 10. In the image forming apparatus 10, the CPU 11 reads and executes operation programs as needed, thereby performing various functions provided in the image forming apparatus 10. In the present embodiment, the primary functional block that performs the paper-ejection section determination and charging process is explained.

FIG. 4 is a diagram that illustrates an example of the configuration of the primary functional block regarding the paper-ejection section determination and charging process. As illustrated in FIG. 4, the CPU 11 includes a setting unit 101, a determining unit 102, and an updating unit 103. Here, the setting unit 101 is equivalent to "setting unit". The determining unit 102 is equivalent to "determining unit". The updating unit 103 is equivalent to "updating unit".

The setting unit 101 sets each table value in the setting table D1.

The determining unit 102 determines a paper ejection section based on tag information (the presence or absence of a tag VLAN or the ID of a tag VLAN) and a table value in the setting table D1.

The updating unit 103 updates charging information of the counter in the setting table D1 with regard to the paper-ejection section table to which paper has been ejected.

Furthermore, a table value in the setting table D1 is loaded into the RAM 13 during activation, the value is manipulated by each unit, and the manipulated value is stored and retained in the HDD 14.

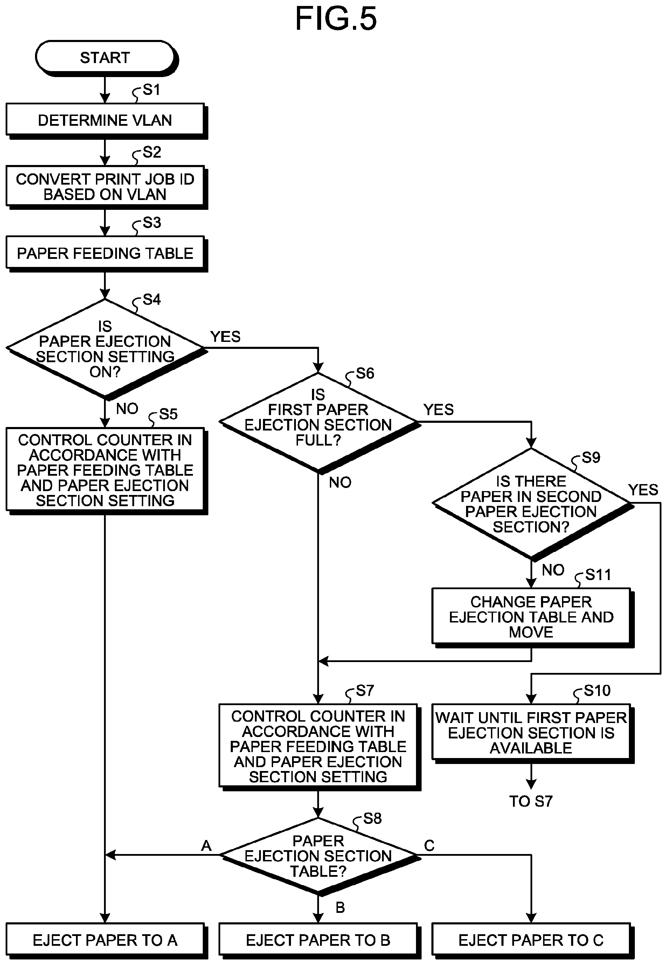

FIG. 5 is a diagram that illustrates an example of the flow of the paper-ejection section determination and charging process by the image forming apparatus 10 (the CPU 11). This flow is executed when the image forming apparatus 10 receives a printing request signal, which is transmitted from any one of the PCs (the PC 20A, the PC 20B, the PC 20C) via the corresponding network (the first network 40A, the second network 40B, the third network 40C).

First, the CPU 11 determines whether an Ethernet (registered trademark) frame, received by the communication I/F 17, includes a tag VLAN (S1).

Then, the CPU 11 applies a weight to the ID of a print job based on whether the Ethernet frame includes a tag VLAN and, when a tag VLAN is included, the ID of the tag VLAN (S2). For example, the CPU 11 uses a method, for example, adding a value for determining the presence or absence of a tag VLAN to the beginning of the ID of the print job and then adding the ID of the tag VLAN, thereby applying a weight. This makes it possible to uniquely determine which one of the PCs in the three network systems (the first network 40A, the second network 40B, the third network 40C) the job has come from. Furthermore, information to which a weight has been applied is equivalent to "paper-ejection request information".

Then, paper is specified based on the paper feeding settings provided by the image forming apparatus 10 and the printing settings of the print job transmitted from the PC (S3) .

Then, the CPU 11 determines whether the paper ejection section setting is valid or invalid (S4).

When the paper ejection section setting is invalid (OFF) (S4: No), the CPU 11 determines that the paper ejection section for the print job is the default paper ejection section A 161 indicated by the table value "A" of "the paper ejection section 1" in the setting table D1 and then controls the counter so as to update the charging information in "counter" that corresponds to the table value "A" of "the paper ejection section 1" in the setting table D1 (S5).

After the paper ejection section for the print job is determined, printed paper is ejected through the determined paper ejection section; however, if paper is not ejected for some reason, the update to "counter" is cancelled.

Furthermore, the amount of charging information to be added to "counter" is changeable in accordance with differences in printing output settings, for example, a type of paper used or color/monochrome. In such a case, the HDD 14, or the like, stores correspondence information relating an additional amount with regard to each printing form, such as a type of paper or color/monochrome.

When the paper ejection section setting is valid (ON), the paper ejection section 1 for the print job is determined, and it is determined whether the paper ejection section set as the paper ejection section 1 is full (S6).

For example, when it is determined that there is no tag VLAN based on the value added to the beginning of the ID of the print job, the corresponding table value of "network" in the setting table D1 is "Net_A", and the table value "A", i.e., the paper ejection section A 161, in "the paper ejection section 1" corresponding to "Net_A" is determined as the paper ejection section for the print job.

Furthermore, when it is determined that there is a tag VLAN based on the value added to the beginning of the ID of the print job, the corresponding table value of "network" is "Net_B" or "Net_C". Moreover, any one of them is determined based on the ID of the tag VLAN, which is added subsequent to the beginning thereof. For example, when the ID of the tag VLAN is "10", "Net_B" is determined, and the table value "B", i.e., the paper ejection section B 162, in "the paper ejection section 1" corresponding to "Net_B" is determined as the paper ejection section for the print job.

It is determined whether the paper ejection section 1 is full in accordance with the number of print jobs spooled in the paper ejection section 1, the operating state of the paper ejection section 1, the presence or absence of paper, or the like.

When the paper ejection section 1 is not full (S6: No), the CPU 11 controls the counter so as to update the charging information in "counter" that corresponds to the determined paper ejection section 1 in the setting table D1 (S7) .

For example, when the paper ejection section 1 is the table value "A", i.e., the paper ejection section A 161, the CPU 11 updates the table value of "counter" that corresponds to "Net_A" in the setting table D1.

Furthermore, when the paper ejection section 1 is the table value "B", i.e., the paper ejection section B 162, the CPU 11 updates the table value of "counter" that corresponds to "Net_B" in the setting table D1.

The amount of charging information to be added to "counter" is changeable in accordance with differences in printing forms, for example, the type of paper used or color/monochrome. In such a case, the HDD 14, or the like, stores correspondence information relating an additional amount with regard to each printing form, such as the type of paper or color/monochrome.

Then, the CPU 11 ejects printed paper for the print job through the determined paper ejection section (S8). If paper is not ejected for some reason, the update to "counter" is cancelled.

Conversely, when the paper ejection section 1 is full (S6: Yes), it is determined whether there is paper in the second paper ejection section that is set as "the paper ejection section 2" in the setting table D1 (S9). When there is paper in the second paper ejection section (S9: Yes), paper ejection is not conducted, and a waiting state continues until the paper ejection section 1 is not any more full (S10), and the process proceeds to Step S7. Alternatively, the print job may be cancelled.

When there is no paper in the second paper ejection section (S9: No), the second paper ejection section is applied as a paper ejection section, and the paper-ejection section table is moved so that it is moved to a place adjacent to the paper-ejection section table of the first paper ejection section (S11). Moving the place avoids picking up wrong paper. After it is confirmed that paper is removed, the paper-ejection section table is moved to the first paper ejection section.

After Step S11, Step S7 and subsequent steps are performed.

Furthermore, the primary operation is an example, and part of the process may be performed by a different device in the network.

As described above, a paper ejection section is prepared depending on each network system, and charging information (counter) is also controllable in accordance with each network and paper used. Each network is connected to a PC, and each network enables printing. In the flow, it is determined whether there is a tag VLAN or which network has commanded printing based on the ID of a tag VLAN, and paper ejection and update to charging information are conducted depending on a network.

When networks are separated with a system using a tag VLAN such as Tombolo for each user in the networks, a paper ejection section for print-out may be separated under a condition such as whether a tag VLAN is used or not. Moreover, for example, when there are multiple companies on the same floor and the single printer needs to be shared by the companies or the single printer needs to be shared by departments, a paper ejection section may be separated so that it is possible to determine which company has commanded paper ejection. Furthermore, by controlling the counter depending on the paper ejection section, the type of paper, the number of pieces of paper, or the like, charging is manageable for each company or department.

Thus, even when different companies, departments, or the like, command printing from the common image forming apparatus via a corresponding network, each company, department, or the like, is capable of managing a paper-ejection section table and charging information in a separated manner.

By thus determining a paper ejection section with a tag VLAN, the paper ejection section may be separated with the ID of the tag VLAN even when a network system is different, and the setting of a paper ejection section may be facilitated.

### Second embodiment

A network system is characterized in that charging information on charge for a network device that is compatible with a tag VLAN is acquired in accordance with a plurality of paper ejection sections and the type of paper ejected to each of the paper ejection sections, it is determined whether paper is to be ejected to a different paper ejection section in accordance with the acquired charging information and the state of a paper ejection section to which paper is ejected by the network device that is charged based on the charging information, and when it is determined that paper is to be ejected to the different paper ejection section, the paper ejection section is switched.

A program executed by the image forming apparatus according to the embodiment is provided by being stored, in the form of a file that is installable and executable, in a recording medium readable by a computer, such as a CD-ROM, a flexible disk (FD), a CD-R, or a DVD (digital versatile disk).

Furthermore, a configuration may be such that the program executed by the image forming apparatus according to the embodiment is stored in a computer connected via a network such as the Internet and provided by being downloaded via the network. Moreover, a configuration may be such that the program executed by the image forming apparatus according to the embodiment is provided or distributed via a network such as the Internet. Moreover, a configuration may be such that the program according to the embodiment is provided by being previously installed in a ROM, or the like.

According to the present embodiments, there is an advantage such that charging for each user with regard to each different paper ejection section is controllable.

The above-described embodiments are illustrative and do not limit the present invention. Thus, numerous additional modifications and variations are possible in light of the above teachings. For example, at least one element of different illustrative and exemplary embodiments herein may be combined with each other or substituted for each other within the scope of this disclosure and appended claims. Further, features of components of the embodiments, such as the number, the position, and the shape are not limited the embodiments and thus may be preferably set. It is therefore to be understood that within the scope of the appended claims, the disclosure of the present invention may be practiced otherwise than as specifically described herein.

The method steps, processes, or operations described herein are not to be construed as necessarily requiring their performance in the particular order discussed or illustrated, unless specifically identified as an order of performance or clearly identified through the context. It is also to be understood that additional or alternative steps may be employed.

Further, any of the above-described apparatus, devices or units can be implemented as a hardware apparatus, such as a special-purpose circuit or device, or as a hardware/software combination, such as a processor executing a software program.

Further, as described above, any one of the above-described and other methods of the present invention may be embodied in the form of a computer program stored in any kind of storage medium. Examples of storage mediums include, but are not limited to, flexible disk, hard disk, optical discs, magneto-optical discs, magnetic tapes, nonvolatile memory, semiconductor memory, read-only-memory (ROM), etc.

Alternatively, any one of the above-described and other methods of the present invention may be implemented by an application specific integrated circuit (ASIC), a digital signal processor (DSP) or a field programmable gate array (FPGA), prepared by interconnecting an appropriate network of conventional component circuits or by a combination thereof with one or more conventional general purpose microprocessors or signal processors programmed accordingly.

Each of the functions of the described embodiments may be implemented by one or more processing circuits or circuitry. Processing circuitry includes a programmed processor, as a processor includes circuitry. A processing circuit also includes devices such as an application specific integrated circuit (ASIC), digital signal processor (DSP), field programmable gate array (FPGA) and conventional circuit components arranged to perform the recited functions.

## Claims

1. An image forming apparatus (10) connectable to a plurality of networks (40A, 40B, 40C) including a network device (20A, 20B, 20C) that is compatible with a tag VLAN, the image forming apparatus (10) comprising:
a plurality of paper-ejection section tables;
a storage unit (14) configured to store correspondence information relating tag information on the tag VLAN, paper-ejection section information indicating the paper-ejection section table, and charging information;
a determining unit (102) configured to determine the paper-ejection section table based on the correspondence information and the tag information included in paper-ejection request information transmitted from an information processing apparatus (10) in any network among the plurality of networks (40A, 40B, 40C); and
an updating unit (103) configured to update charging information that is included in the correspondence information and corresponds to the paper-ejection section table determined by the determining unit (102).

2. The image forming apparatus (10) according to claim 1, further comprising a setting unit (101) configured to set the correspondence information.

3. The image forming apparatus (10) according to claim 1 or 2, wherein
the updating unit (103) changes an amount of additional charge in accordance with a print format of paper ejected through the paper-ejection section table.

4. The image forming apparatus (10) according to any one of claims 1 to 3, wherein
the correspondence information includes, as the paper-ejection section information, paper-ejection section information indicating a first paper-ejection section table and paper-ejection section information indicating a second paper-ejection section table,
when the first paper-ejection section table is full, the determining unit (102) determines that the paper-ejection section table is the second paper-ejection section table, and
the second paper-ejection section table is moved to the first paper-ejection section table.

5. A system (1) comprising a network device (20A, 20B, 20C) connected to a plurality of networks (40A, 40B, 40C) and compatible with a tag VLAN and an image forming apparatus (10) connectable to the networks (40A, 40B, 40C), the system (1) comprising:
a plurality of paper-ejection section tables;
a storage unit (14) configured to store correspondence information relating tag information on the tag VLAN, paper-ejection section information indicating the paper-ejection section table, and charging information;
a determining unit (102) configured to determine the paper-ejection section table based on the correspondence information and the tag information included in paper-ejection request information transmitted from an information processing apparatus (10) in any network among the plurality of networks (40A, 40B, 40C); and
an updating unit (103) configured to update charging information that is included in the correspondence information and corresponds to the paper-ejection section table determined by the determining unit (102).

6. A system (1) that
acquires charging information on charge for a network device (20A, 20B, 20C) that is compatible with a tag VLAN depending on a plurality of paper ejection sections (161, 162, 163) and a type of paper ejected to each of the paper ejection sections (161, 162, 163); and
determines whether paper is to be ejected to a different paper ejection section in accordance with the acquired charging information and a state of a paper ejection section to which paper is ejected by the network device (20A, 20B, 20C) that is charged based on the charging information and switches the paper ejection section when it is determined that paper is to be ejected to the different paper ejection section.

7. A charging method for a system (1) including a network device (20A, 20B, 20C) connected to a plurality of networks (40A, 40B, 40C) and compatible with a tag VLAN and an image forming apparatus (10) connectable to the networks (40A, 40B, 40C) and including a plurality of paper-ejection section tables, the charging method comprising:
adding tag information on a tag VLAN to paper-ejection request information transmitted from an information processing apparatus (10) in any network among the plurality of networks (40A, 40B, 40C);
determining the paper-ejection section table based on the tag information included in the paper-ejection request information and correspondence information previously relating tag information on the tag VLAN, paper-ejection section information indicating the paper-ejection section table, and charging information; and
updating charging information that is included in the correspondence information and corresponds to the paper-ejection section table determined at the determining.

8. The charging method according to claim 7, further comprising setting the correspondence information.

9. The charging method according to claim 7 or 8, wherein
the updating includes changing an amount of additional charge in accordance with a print format of paper ejected through the paper-ejection section table.

10. The charging method according to any one of claims 7 to 9, wherein
the correspondence information includes, as the paper-ejection section information, paper-ejection section information indicating a first paper-ejection section table and paper-ejection section information indicating a second paper-ejection section table,
when the first paper-ejection section table is full, it is determined that the paper-ejection section table is the second paper-ejection section table, and
the second paper-ejection section table is moved to the first paper-ejection section table.
